# EUROPEAN PATENT APPLICATION

(11) **EP 3 862 093 A1**
(43) Date of publication of application: **11.08.2021**
(21) Application number: 21153903.6
(22) Date of filing: 28.01.2021
(51) Int. Cl.: B01L 9/00, B01L 3/00, G01N 35/10, B01L 3/02

(54) **MAINTENANCE RESERVOIR**

(30) Priority: 10.02.2020 US 202016786443
(71) Applicant: Funai Electric Co., Ltd., Daito, Osaka, 574-0013 (JP)
(72) Inventor: JONES, Brian T., Lexington, Kentucky 40508 (US)
(74) Representative: Becker, Eberhard

(57) **Abstract**

A maintenance reservoir for a digital dispense system. The maintenance reservoir includes an elongate trough disposed in a micro-well plate holder for holding fluid dispensed from a fluid droplet ejection head of a fluid droplet cartridge in the digital dispense system. The maintenance reservoir is disposed in the micro-well plate holder on at least one side of a micro-well plate and includes a position indicator to signify if the elongate trough is present or absent from the micro-well plate holder.

## Description

### TECHNICAL FIELD

The disclosure is directed to fluid droplet dispense devices that are used to accurately dispense one or more fluids onto or into precise areas of a substrate or for building up layers of material in predetermined areas on the substrate and to maintenance methods and apparatus for the fluid droplet dispense devices.

### BACKGROUND

In the medical field, in particular, there is a need for automated sample preparation and analysis. The analysis may be colorimetric analysis or require the staining of samples to better observe the samples under a microscope. Such analysis may include drug sample analysis, blood sample analysis and the like. In the analysis of blood, for example, blood is analyzed to provide a number of different factors that are used to determine the health of an individual. When there are a large number of patients that require blood sample analysis, the procedures may be extremely time consuming. Also, there is a need for accurate preparation of the samples so that the results can be relied on. There are many other situations that require sample analysis in the medical field and in other fields that can benefit from the use of analytical instruments that provide accurate and reproduceable results, such as micro-titration of multiple samples.

Mirco-well plates, slides and other substrates are used for many experiments and laboratory procedures. The process of filling the wells in a micro-well plate or spotting is often performed manually or using expensive lab equipment. In some cases, the wells are filled with hand operated pipettes. In other cases, high-end automated devices based on pipette technology are used to fill the well plates. Such automated devices accommodate a dispense head that moves across a substrate to deposit fluid.

Precise deposition of fluid into the wells of a micro-well plate requires all nozzles of the ejection heads of the fluid droplet cartridges to be in pristine condition. In order to maintain the nozzles of the ejection head in pristine condition, a maintenance station is provided in the digital dispense device whereby all the nozzles of the ejection head are fired at regular intervals. Maintenance of the nozzles is required to prevent build-up of contaminants within the nozzles that may cause clogging or misfiring of the nozzles. Conventional printing devices typically use permanently installed maintenance stations. However, when using a fluid droplet dispense device for applications in which the fluids dispensed can vary to a much greater degree, the problem arises that some of the fluids may be incompatible with each other, and a permanent maintenance spit station is not a viable, safe solution for such applications. In addition, in some experiments, the remainder of the fluids in the ejection head will need to be disposed of safely and in an approved manner. For example, some fluids may be characterized as biohazard waste materials.

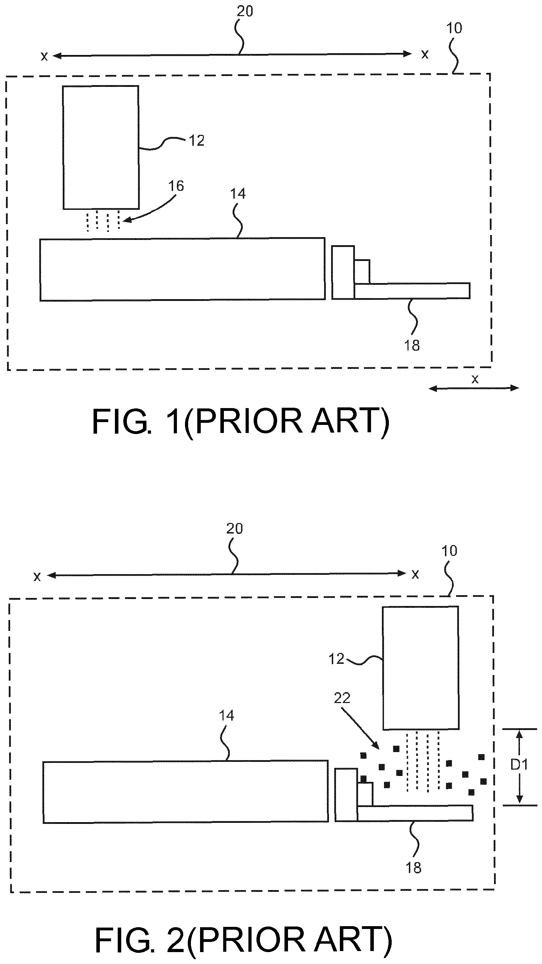

Another problem associated with conventional, permanently installed maintenance stations is that a fine mist is often created as the ejection head dispenses fluid at the maintenance station. FIG. 1 illustrates a schematic view of a fluid droplet dispense device 10 having a movable ejection head cartridge 12, a substrate 14 onto which a fluid 16 is deposited, and a maintenance station 18 containing an absorbent pad for absorbing fluid ejected from nozzles of the ejection head cartridge 12 during maintenance of the nozzles. During a fluid ejection operation, the ejection head cartridge 12 moves back and forth in the x-direction indicated by arrow 20 across the substrate 14. During maintenance of the ejection head cartridge 12 as illustrated in FIG. 2, the ejection head cartridge 12 moves in the x-direction into the maintenance station 18 wherein fluid is ejected toward the absorbent pad in the maintenance station 18.

In applications wherein the digital dispense device is used to for life sciences procedures, some of the fluids that are dispensed may include drugs, living cells, proteins, enzymes, antibodies and many other types of fluids that must be disposed of because of biohazards and other concerns. For some applications, mixing of different fluids in the permanent maintenance station 18 may be undesirable or hazardous. Conventional digital dispense devices 10 that include a permanent maintenance station do not accommodate removal of the waste fluids from the digital dispense device. Accordingly, there is a need for an improved maintenance apparatus for a fluid droplet dispense device to prevent contamination of the device components and to dispose of hazardous or biowaste fluids that may be dispensed by the device during maintenance of the ejection head cartridge 12.

### SUMMARY

In view of the foregoing, an embodiment of the disclosure provides a maintenance reservoir for a digital dispense system. The maintenance reservoir includes an elongate trough disposed in a micro-well plate holder for holding fluid dispensed from a fluid droplet ejection head of a fluid droplet cartridge in the digital dispense system. The maintenance reservoir is disposed in the micro-well plate holder on at least one side of a micro-well plate and includes a position indicator to signify if the elongate trough is present or absent from the micro-well plate holder.

In another embodiment there is provided a digital dispense system for ejection of fluids onto a substrate. The digital dispense system includes a housing unit and a fluid droplet ejection cartridge disposed in the housing unit. The fluid droplet ejection cartridge contains one or more fluids and is disposed on a fluid cartridge translation mechanism for moving the fluid droplet ejection cartridge back and forth in an x-direction within the housing unit. A micro-well plate holder is provided for holding a micro-well plate below the fluid droplet ejection cartridge. A maintenance reservoir is removably disposed in the micro-well plate holder for periodic maintenance of the fluid droplet ejection cartridge.

In yet another embodiment there is provided a method for maintaining a fluid droplet ejection cartridge in a digital dispense system. The method includes providing a housing unit and a fluid droplet ejection cartridge disposed in the housing unit, the fluid droplet ejection cartridge containing one or more fluids and being disposed on a fluid cartridge translation mechanism for moving the fluid droplet ejection cartridge back and forth in an x-direction within the housing unit. A micro-well plate holder is provided for holding a micro-well plate below the fluid droplet ejection cartridge during fluid dispensing of the one or more fluids into wells of the micro-well plate. A maintenance reservoir that includes an elongate trough is disposed on at least one side of the micro-well plate. The elongate trough includes a position indicator to signify if the elongate trough is present or absent from the micro-well plate holder. The fluid droplet ejection cartridge is periodically moved to a position adjacent to the elongate trough, and fluid is ejected from the fluid droplet ejection cartridge into the elongate trough for a predetermined period of time.

In some embodiments, the elongate trough is removable from the micro-well plate holder. In some embodiments, the elongate trough has a length that corresponds to a length of a column of wells in the micro-well plate. In still other embodiments, the elongate trough has a volume that is equal to a volume of fluid in the fluid droplet ejection cartridge. In some embodiments, the elongate trough has a rectangular cross-sectional shape.

In some embodiments, the elongate trough also includes a position indicator that is used to signify if the elongate trough is present or absent from the micro-well plate holder. In other embodiments, fluid ejection from the fluid droplet ejection cartridge is terminated when a sensor fails to detect the position indicator.

In some embodiments, fluid is ejected from the fluid droplet ejection cartridge into the elongate trough for a period of time sufficient to clean nozzles on the fluid droplet ejection cartridge. In other embodiments, fluid is ejected from the fluid droplet ejection cartridge into the elongate trough for a period of time sufficient empty fluid from the fluid droplet ejection cartridge.

An advantage of the disclosed embodiments is that it provides unique low-cost maintenance reservoir that can be removed from the digital dispense system so that fluid ejected from the fluid droplet ejection cartridges can be disposed of in an environmentally safe manner. Other features and advantages of the disclosed embodiments may be evident by reference to the attached drawings and following disclosure.

### BRIEF DESCRIPTION OF THE DRAWINGS

FIGs 1 and 2 are schematic views of prior art digital dispense systems showing maintenance stations therefor.
FIG. 3 is a perspective view of a digital dispense system according to an embodiment of the disclosure.
FIG. 4 is an elevational view, not to scale, of a back side of the digital dispense system of FIG. 3.
FIG. 5 is a plan view, not to scale, of a micro-well plate for use with a digital dispense system.
FIG. 6 is an elevational, not to scale, of the micro-well plate of FIG. 5.
FIG. 7 is a perspective view, not to scale, of the micro-well plate of FIG. 5 disposed on a prior art well plate holder.
FIG. 8 is a perspective view, not to scale, of a micro-well plate disposed on a well plate holder according an embodiment of the disclosure.
FIG. 9 is a plan view, not to scale, of the micro-well plate and well plate holder of FIG. 8.
FIG. 10 is a side view, not to scale, of the micro-well plate and well plate holder of FIG. 8.
FIG. 11 is a schematic view of a digital dispense system showing use of a micro-well plate and well plate holder according to an embodiment of the disclosure.

### DETAILED DESCRIPTION OF EXEMPLARY EMBODIMENTS

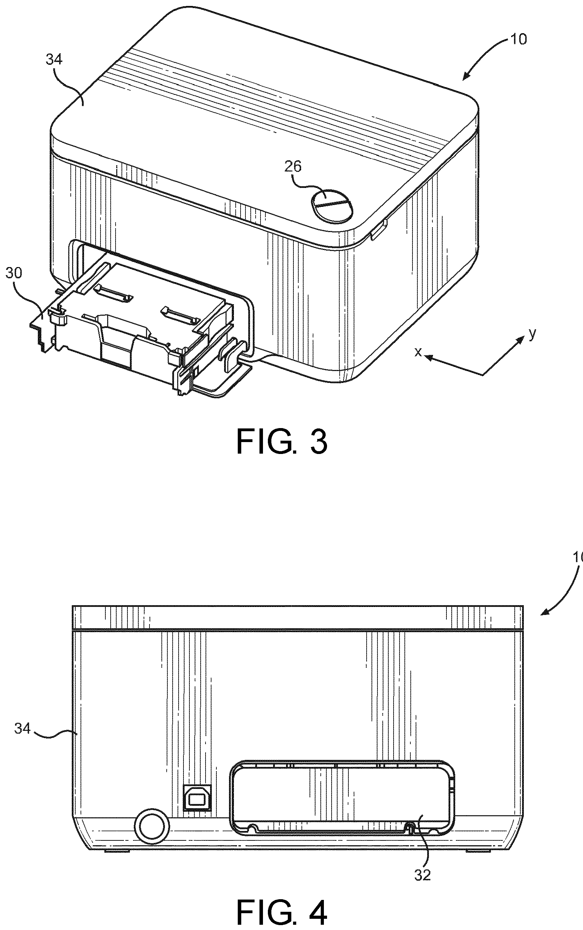

With reference to FIGs. 3 and 4 there is shown a digital dispense device 10 that is activated by a switch 26 for accurately dispensing an amount of one or more fluids onto a substrate such as a micro-well plate from a fluid droplet ejection cartridge. The fluid droplet ejection cartridge moves in an x-direction across the micro-well plate as the well plate is moved through the digital dispense device in a y-direction by a tray movement mechanism 30. The tray movement mechanism 30 moves the micro-well plate on a micro-well plate holder through the digital dispense device 10 in a direction that is orthogonal to the direction of movement of the fluid droplet ejection cartridge during a fluid deposition process so that all of the wells of the micro-well plate may be filled with fluid. The well plate holder is designed to properly register the micro-well plate with respect to the digital dispense device 10. The well plate holder may also be attached to gears to move the well plate holder and micro-well plate in the y-direction through the digital dispense device. A rear opening 32 (FIG. 4) is provided in the housing 34 of the digital dispense device 10 so that all of the wells of the micro-well plate may be filled as the well-plate holder moves the micro-well plate through the digital dispense device.

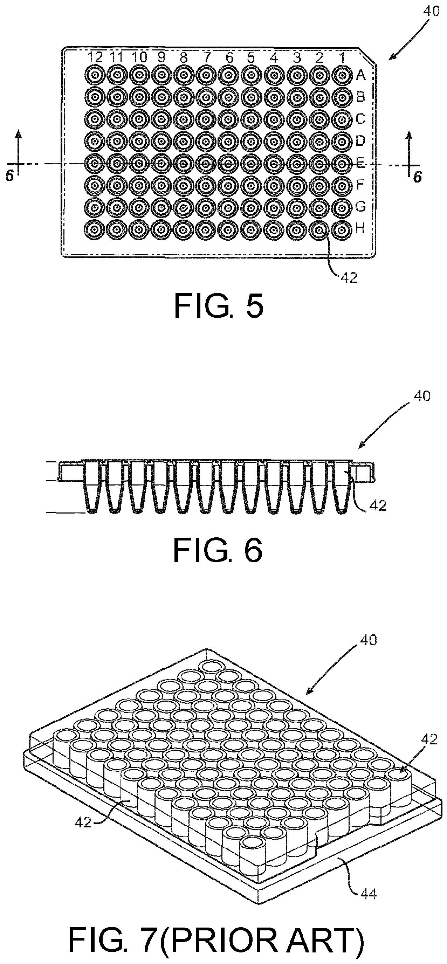

The micro-well plate 40 used with the digital dispense device 10 is illustrated in FIGs. 5 and 6. The micro-well plate 40 includes a plurality of wells 42 disposed in rows 1-12 and columns A-H. A conventional micro-well plate holder 44 containing the micro-well plate 40 is illustrated in FIG. 7. Accordingly, in the prior art digital dispense device (FIGs. 1 and 2), maintenance of the ejection head on the fluid droplet ejection cartridge 12 only takes place in the permanent maintenance station 18. Hence, any fluid ejected from the fluid droplet ejection cartridge 12 that is not deposited onto the substrate 14 or into wells of a micro-well plate remain in the digital dispense device 10.

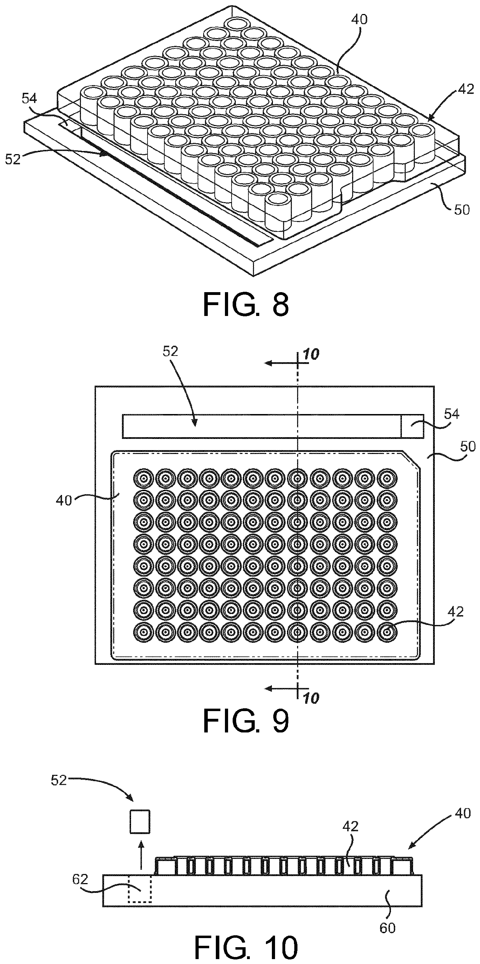

FIGs. 8-10 illustrate an improved micro-well plate holder 50 for the micro-well plate 40 that includes a maintenance reservoir in the shape of an elongate trough 52. The elongate trough 52 is disposed in the micro-well plate holder 50 on at least one side of the micro-well plate 40 and has a length that is sufficient to accept fluid from each of the rows 1-12 of the well plate 40. In the embodiment shown in FIG. 9, the elongate trough 52 is disposed on only one side of the well plate holder 50. However, a well-plate holder according to the disclosure may have an additional trough on an opposing side of the well plate holder 50. In another embodiment, elongate troughs may be disposed on three or four sides of the well plate holder 50. However, a single trough 52 may be sufficient to retain all of the fluid in a fluid droplet ejection cartridge for a variety of fluid deposition applications.

An important feature of the improved micro-well plate holder 50 and trough 52 is that there is a position indicator 54 at one end of the trough 52 that enables a sensor in the digital dispense device to determine if the trough 52 is present on the well-plate holder 50. In some embodiments, the position indicator is a raised area 54 or flat area of the trough 52 that can be sensed by a sensor in the digital dispense device. The sensor may be a lever that is raised when the micro-well plate holder 50 contains the trough 52 and the raised area 54 and that is lowered or falls when a micro-well plate holder does not contain the trough 52. In another embodiment, the sensor may be an optical sensor that is used to detect indicia that indicates the presence or absence of the trough 52. Any other suitable sensor, known to those skilled in the art may be used. The sensor may be configured by software in the digital dispense device to alert the user that the trough 52 is not present. The sensor may also be configured to alert a user that the micro-well plate holder 50 and micro-well plate have been removed from the device once the wells 42 have been filled, and the device is ready for a new micro-well plate 40 and new fluid deposition procedure.

In another embodiment illustrated in FIG. 10, the trough 52 described above is removably installed in a micro-well plate holder 60 in a recessed area 62 therein. Thus, when the trough 52 is full, the trough 52 may be removed from the micro-well plate holder 60 and a new trough 52 installed in the holder 60. In some embodiments, the elongate trough 52 may have a rectangular cross-sectional shape. However, any suitable cross-sectional shape of the trough may be used for holding waste fluid.

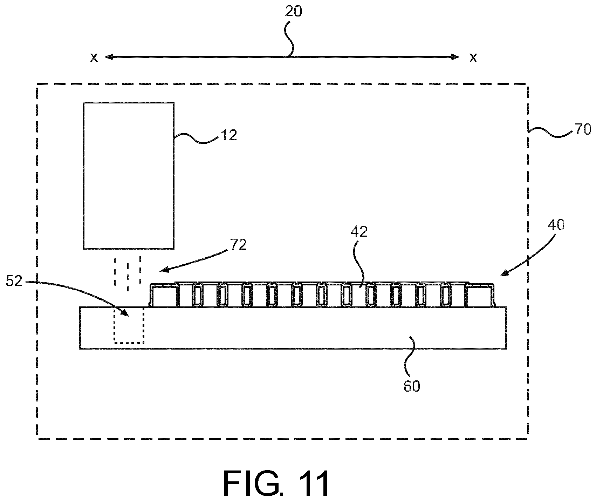

FIG. 11 is a schematic illustration of a digital dispense device 70 that does not require a permanent maintenance station. Accordingly, the device 70 may be used to fill wells 42 of a micro-well plate 40. The micro-well plate 40 is disposed on a well plate holder 60 that includes the removable trough 52. During a maintenance step, if the trough 52 is present as sensed by a sensor in the device 70, fluid 72 may be deposited into the trough 52 from the fluid droplet ejection cartridge 12 to remove any contamination or blockage of nozzles on the ejection head, and/or to empty the cartridge 12 of a particular fluid used to fill the wells 42 of the micro-well plate 40.

In another embodiment, the trough 52 may be included in an x-y table that is designed to hold and move the micro-well plate 40 for filling the wells 42 rather than using a well plate holder as described above. In the embodiments described herein, the trough and well plate holder may be made of a variety of materials including metals, plastics and ceramics. The materials for trough and well plate holder are desirably selected from materials that are compatible with the fluids being ejected from the fluid droplet ejection cartridges.

It is noted that, as used in this specification and the appended claims, the singular forms "a," "an," and "the," include plural referents unless expressly and unequivocally limited to one referent. As used herein, the term "include" and its grammatical variants are intended to be non-limiting, such that recitation of items in a list is not to the exclusion of other like items that can be substituted or added to the listed items.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

## Claims

1. A maintenance reservoir (52) for a digital dispense system (10), comprising an elongate trough (52) disposed in a micro-well plate holder (50, 60) for holding fluid dispensed from a fluid droplet ejection head of a fluid droplet ejection cartridge in the digital dispense system, wherein the maintenance reservoir is disposed in the micro-well plate holder on at least one side of a micro-well plate (40) and the maintenance reservoir includes a position indicator (54) to signify if the elongate trough is present or absent from the micro-well plate holder.

2. The maintenance reservoir of claim 1, wherein the elongate trough (52) is removable from the micro-well plate holder (50, 60).

3. The maintenance reservoir of claim 1, wherein the elongate trough (52) has a length that corresponds to a length of a column of wells in the micro-well plate (40).

4. The maintenance reservoir of claim 1, wherein the elongate trough (52) has a volume that is equal to a volume of fluid in a fluid droplet ejection cartridge.

5. The maintenance reservoir of claim 1, wherein the elongate trough (52) has a rectangular cross-sectional shape.

6. A digital dispense system comprising the maintenance reservoir (52) of claim 1.

7. A digital dispense system (10) for ejection of fluids onto a substrate, the digital dispense system comprising:
a housing unit (34);
a fluid droplet ejection cartridge disposed in the housing unit, the fluid droplet ejection cartridge comprising one or more fluids and being disposed on a fluid cartridge translation mechanism (30) for moving the fluid droplet ejection cartridge back and forth in an X-direction within the housing unit;
a micro-well plate holder (50, 60) for holding a micro-well plate (40) below the fluid droplet ejection cartridge; and
a maintenance reservoir (52) removably disposed in the micro-well plate holder (50, 60) for periodic maintenance of the fluid droplet ejection cartridge.

8. The digital dispense system of claim 7, wherein the maintenance reservoir further comprises a position indicator (54) to signify if the elongate trough is present or absent from the micro-well plate holder when sensed by a sensor of the digital dispense system.

9. The digital dispense system of claim 7, wherein the maintenance reservoir (52) comprises an elongate trough (52) has a length that corresponds to a length of a column of wells in the micro-well plate.

10. The digital dispense system of claim 7, wherein the maintenance reservoir (52) has a volume that is equal to a volume of fluid in the fluid droplet ejection cartridge.

11. A method for maintaining a fluid droplet ejection cartridge in a digital dispense system (10), the method comprising:
providing a housing unit (34) and a fluid droplet ejection cartridge disposed in the housing unit, the fluid droplet ejection cartridge comprising one or more fluids and being disposed on a fluid cartridge translation mechanism (30) for moving the fluid droplet ejection cartridge back and forth in an X-direction within the housing unit; a micro-well plate holder (50, 60) for holding a micro-well plate (40) below the fluid droplet ejection cartridge during fluid dispensing of the one or more fluids into wells (42) of the micro-well plate; and a maintenance reservoir (52) comprising an elongate trough (52) disposed in the micro-well plate holder on at least one side of the micro-well plate, wherein the elongate trough comprises a position indicator (54) to signify if the elongate trough is present or absent from the micro-well plate holder;
periodically moving the fluid droplet ejection cartridge to a position adjacent to the elongate trough; and
ejecting fluid from the fluid droplet ejection cartridge into the elongate trough for a predetermined period of time.

12. The method of claim 11, wherein the predetermined period of time is a period of time sufficient to clean nozzles on the fluid droplet ejection cartridge.

13. The method of claim 11, wherein the predetermined period of time is a period of time sufficient to empty the fluid from the fluid droplet ejection cartridge into the elongate trough (52).

14. The method of claim 11, wherein the elongate trough (52) is removable from the micro-well plate holder.

15. The method of claim 11, further comprising terminating fluid ejection from the fluid droplet ejection cartridge when a sensor of the digital dispense system fails to detect the position indicator (54).

16. The method of claim 11, wherein the elongate trough (52) has a length that corresponds to a length of a column of wells in the micro-well plate.

17. The method of claim 11, wherein the elongate trough (52) has a volume that is equal to a volume of fluid in the fluid droplet ejection cartridge.
